(19) **Europäisches Patentamt**
**European Patent Office**
**Office européen des brevets**

(11) **EP 4 194 762 A1**

(12) **EUROPEAN PATENT APPLICATION**

(43) Date of publication:
**14.06.2023 Bulletin 2023/24**

(21) Application number: **21214168.3**

(22) Date of filing: **13.12.2021**

(51) International Patent Classification (IPC):
**F24D 19/10** (2006.01)    **G05D 23/13** (2006.01)
**G05D 23/19** (2006.01)

(52) Cooperative Patent Classification (CPC):
**G05D 23/1931; F24D 19/1012; G05D 23/1393**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Grundfos Holding A/S**
**8850 Bjerringbro (DK)**

(72) Inventors:
- **Kallesøe, Carsten Skovmose**
  **8800 Viborg (DK)**
- **Nielsen, Brian Kongsgaard**
  **8800 Viborg (DK)**
- **Sørensen, Søren Birk**
  **8850 Bjerringbro (DK)**

(74) Representative: **Patentanwälte Vollmann Hemmer Lindfeld**
**Partnerschaft mbB**
**Wallstraße 33a**
**23560 Lübeck (DE)**

(54) **METHOD FOR ADJUSTING A DESIRED FEED TEMPERATURE IN A HEAT TRANSFER SYSTEM AND A HEAT TRANSFER SYSTEM**

(57)    The invention refers to a method for adjusting a desired feed temperature ($T_F$) in a heat transfer system by controlling a heat transfer device (6,8) in the heat transfer system, the heat transfer device (6,8) comprising an actuator (V; PS) arranged in a single flow path of the heat transfer system and being configured for regulating an amount of heat transfer by adjusting the fluid flow in said single flow path, wherein a closed loop temperature control (22) is carried out to set a control signal ($x_r$) controlling the actuator (V; PS) wherein a closed loop temperature control (22) a gain factor (k) is applied to an output signal (v) of a regulator (24), the gain factor (k) being calculated at least on basis of a feed temperature signal ($\theta_F$) representing the feed temperature ($T_F$) detected in the heat transfer system downstream the heat transfer device (6,8), and a heat transfer device using a respective method.

Fig. 5

**Description**

The invention refers to a method for adjusting a desired feed temperature in a heat transfer system by controlling a heat transfer device to a heat transfer system.

In heat transfer systems as cooling or heating systems, in particular in HVAC-systems for buildings, it is known to use heat exchangers or mixing devices to adjust the feed temperature for one or more load circuits. By the mixing device a heat transfer medium like water from a return flow is mixed with liquid from a supply line to achieve a desired temperature of a feed flow of the heating or cooling circuit. In those systems it is known to have a temperature control for adjusting the feed temperature. The temperature control outputs a control signal for example towards a mixing valve adjusting the mixing ratio to achieve the desired feed temperature.

A problem in those temperature controls may be pressure dependency. The pressure affects the dynamics of the control. The influence of a supply pressure may be eliminated by pressure independent valves that mechanically adjust itself to the supply pressure. However, there are other effects which may affect the control performance, like for example the flow and the difference between supply and return temperature.

In view of this it is the object of the invention to provide an improved method for adjusting a desired feed temperature in a heat transfer system and to provide an improved heat transfer system ensuring a better control performance which in particular is not affected by the supply pressure.

This object is achieved by a method having the features defined in claim 1 and by a heat transfer system having the features defined in claim 12. Preferred embodiments are defined in the dependent subclaims, in the following description and the accompanying drawings.

The method according to the invention refers to the control of a heat transfer device in a heat transfer system. This heat transfer device comprises an actuator which is arranged in a single flow path of the heat transfer system, and which is configured for regulating the flow in this single flow path. By regulating the fluid flow the heat transfer is adjusted, i.e. the amount of heat transferred from a supply to a load in a heating system or from a load towards the supply in a cooling system can be adjusted. The heat transfer device preferably is a heat exchanger or a mixing device. In case of a heat exchanger there are two separated circuits, a load circuit and a supply circuit with a heat exchanger there between. In case of a mixing device both circuits are connected in a mixing point allowing to admix a part of a return flow into the supply flow. In case of a mixing device the actuator does not directly act on both entrance flows of the mixing device. In the mixing device used with the method according to the invention, the actuator affects the flow in a single flow path leading towards a mixing point, only. This means the mixing ratio is adjusted by adjusting the flow in a single flow path. In case of a heat exchanger of a heat transfer device the actuator may adjust the fluid flow through the primary side of the heat exchanger. For this the actuator may be arranged on the entry side of the heat exchanger or on the outlet side of the heat exchanger. In all embodiments of the heat transfer device the actuator may be a pump or a two-way valve arranged in the single flow path.

According to the method a closed loop temperature control is carried out to set a control signal controlling the actuator, i.e. a signal for example representing an opening degree of a valve or representing the speed or flow of a pump.

According to the invention in the closed loop temperature control a gain factor is applied to an output signal of a regulator. The regulator may produce an output signal on basis of a temperature difference calculated from a set or desired feed temperature and a temperature value representing the current feed temperature in the system. The gain factor is calculated or derived at least on basis of a feed temperature signal representing the feed temperature detected in the heat transfer system downstream the heat transfer device. This is a current feed temperature detected in the system which is used for calculating the temperature difference on the entry side of the regulator. By this gain factor it is possible to continuously adjust the closed loop control for compensating system variations for example resulting from the supply pressure and other influences affecting the temperature control. The gain factor allows to continuously adjust the loop gain so that preferably the loop gain is constantly equal to a predefined value. By this, the aforementioned negative effects can be compensated.

In a preferred embodiment, in addition the gain factor is calculated on basis of an output of said regulator. This means the gain factor is calculated on basis of the output of said regulator and on basis of a feed temperature signal representing the feed temperature detected. Thus, two values are used as a basis for the gain factor calculation.

According to a further possible embodiment the gain factor may be calculated on basis of two temperature signals, wherein the two temperature signals represent the feed temperature and the temperature in one inlet flow of the heat transfer device. The inlet flow may be one of two inlet flows of a mixing device or the inlet flow of the secondary side of a heat exchanger. The detection of the temperature in one inlet flow simplifies the measurement, since only one temperature in an inlet of the heat transfer device has to be measured. Thus, for example only one temperature sensor in one of the inlets of a mixing device is necessary. It is not required to detect the temperature of a fluid flow in the second inlet. Preferably the two temperature signals represent the feed and a return temperature detected in the heat transfer system. Thus, in a mixing device mixing two fluid flows the temperature on the outlet side of the mixing device is detected and the temperature of one flow on the inlet side. The temperature of the second fluid flow on the inlet side of the mixing device is not regarded. Thus, a temperature sensor for detecting this temperature can be omitted. In case of a heat exchanger of the heat transfer device, the second temperature may be an inlet temperature on the secondary side of the heat exchanger, i.e. the return temperature in the load circuit. Thus, also in this case a feed and a return temperature, both in the load circuit, are considered.

According to a further preferred embodiment of the method said gain factor is calculated on basis of three signals which are the output signal of said regulator, a first temperature signal representing the feed temperature and a second temperature signal representing the return temperature, as explained before. The calculation or determination of the gain factor on basis of these three input values allows a precise and fast gain factor adaption allowing a fast adjustment of the loop gain in the closed loop control.

In a control device there may be provided a gain factor calculation module, preferably an observer for calculating or derive the gain factor on basis of the aforementioned values, in particular the feed temperature and according to further preferred embodiments on basis of the output of said regulator and/or a second temperature signal which for example may be the return temperature as described above.

According to a further embodiment the gain factor may be calculated such that the loop gain of the closed loop control is kept constant, preferably constantly equal to a predefined value. This means the gain factor is adjusted on basis of the aforementioned possible input values to keep a constant loop gain. This allows to constantly adjust the loop gain to compensate changes in the system like the input pressure or other parameters for example as mentioned above.

The closed loop temperature control preferably uses a temperature signal representing the forward or feed temperature as a feedback. By this the closed loop control ensures that the feed temperature is kept on a predefined set value for the feed temperature. Furthermore, the use of the temperature signal representing the feed temperature as feedback in the closed loop controller and for calculation or determination of the gain factor is advantageous, since the number of values measured in the system can be minimized.

Said regulator preferably is a standard regulator, further preferred a PI-regulator or a PID-regulator. This has the advantage that the general configuration of the control scheme or control method corresponds to usual closed loop controllers used for controlling mixing circuits. This has an advantage for installation and configuration, since installers and users are familiar with respective closed loop control systems.

Preferably the output of the regulator is multiplied with the gain factor derived as explained above. By this a further control signal is achieved which is supplied to the actuator. Thereby, the control signal may pass further processing steps.

For example, the control signal, preferably the control signal derived after application of the gain factor is further adjusted by a function representing the characteristic of said actuator, or pump. For example, a non-linear behavior of the actuator may be compensated by such a function representing the characteristics of the actuator. If the actuator for example is a valve, the function may represent the valve characteristics.

In a preferred embodiment said actuator may be a pump or a two-way valve, preferably arranged in a feed line upwards a mixing point of a mixing device, in a shunt which connects the return line and the feed line in a mixing device, or in the return line downstream a junction of the shunt. In case that the heat transfer device is a heat exchanger, the actuator like a pump or two-way valve may be arranged in an inlet line or outlet line on primary side of the heat exchanger, i.e. the side of the heat exchanger being part of a supply circuit. The arrangement of the actuator, either a pump or a two-way valve in a single flow line, preferably in one of the positions mentioned before, allows to directly control or adjust the fluid flow in the respective flow path. This means in the mixing device only one of the two supply flows flowing towards a mixing point is adjusted or controlled by the actuator. The flow in the second supply line or flow path towards the mixing point is not directly influenced. The mixing ratio is changed by adjusting or controlling only one of the input flows. This input flow may be directly controlled or adjusted if the actuator is arranged in the respective feed line or feed flow path upwards a mixing point or in a connection of the return line, i.e. the shunt. If the actuator is arranged in the return line downstream a junction of the shunt, the flow in the shunt is adjusted indirectly by changing or adjusting a diverting flow in the return line. However, these are positions of a valve in a mixing device which are commonly known. In each of the aforementioned positions a valve or a pump may be used as an actuator. The use of a pump or a two-way valve simplifies the design and the control of the heat transfer device compared to the use of a three-way valve, for example.

Beside the method described above, a heat transfer system is subject of the present invention. The heat transfer system according to the invention is described in more detail below. However, it has to be understood that preferred embodiments described with reference to the method can be regarded as preferred embodiments of the heat transfer system, too, and vice versa.

The heat transfer system according to the invention may be a heating and/or cooling system. The heat transfer system comprises a supply circuit and at least one load circuit with a heat transfer device arranged between to control the heat transfer between the supply circuit and the load circuit, i.e. the amount of heat transferred. The heat transfer device may for example be a mixing device or a heat exchanger. In case of a mixing device the fluid flow between the supply circuit and the load circuit can be changed to adjust a temperature in the feed line of the load circuit. In a heat exchanger the amount of heat supplied to the load circuit may be adjusted by changing the fluid flow on the primary side of the heat exchanger, i.e. the side of the heat exchanger which is part of the supply circuit. The heat transfer device comprises at least one actuator which according to the invention is arranged in a single flow path only and configured to regulate the flow of a heat transfer medium between the supply circuit and the at least one load circuit or through a heat exchanger. Furthermore, there is provided a control device controlling said at least one actuator, wherein the control device comprises a regulator configured to carry out a closed loop temperature control, preferably a closed loop temperature control of the feed temperature in the feed line of the load circuit. According to the invention the control device comprises a gain factor calculation module, for example an observer, which is configured to derive or calculate a gain factor to adjust the loop gain of the closed loop temperature control. The gain factor calculation module is configured to calculate the gain factor on basis of at least one feed temperature signal representing the feed temperature of the load circuit. Furthermore, the control device is configured to apply this calculated or derived gain factor to an output signal of the regulator. By this the loop gain can be adjusted and preferably kept constant. This, for example allows a compensation of a changing supply pressure without the need of a pressure compensated control valve.

Preferably said at least one actuator is a pump or a two-way valve. The pump preferably is a centrifugal pump and the flow may be varied by adjusting the speed of the pump. The two-way valve may adjust the flow by changing the opening degree of the valve. According to the invention the actuator directly affects a single flow path only. For example, the mixing ratio in a mixing device is changed or adjusted by adjusting one of the supply flows towards a mixing point of the mixing device.

According to a further preferred embodiment there is provided at least one feed temperature sensor arranged to detect a feed temperature of the at least one load circuit. The feed temperature sensor preferably is arranged on or in a feed flow path of the load circuit. According to a special embodiment the feed temperature sensor may be arranged inside a supply pump which is arranged in the feed line or feed flow path. The feed temperature sensor preferably is connected to the control device and outputs a feed temperature signal, wherein the regulator preferably is configured to receive the feed temperature signal as a feedback signal. Thus, preferably the feed temperature signal is used for both, determining or calculating the gain factor and as a feedback signal for the regulator.

According to a further preferred embodiment there is provided a return temperature sensor as a part of the heat transfer system. The return temperature sensor being configured and arranged to detect a return temperature of said at least one load circuit. The return temperature sensor may be arranged in a return flow path or attached to a return flow path at any suitable position to detect the respective return temperature. Furthermore, it would be possible to integrate the return temperature sensor in a device like a valve or a pump. In particular the return temperature sensor may be integrated with the actuator described before. The return temperature sensor is connected to the control device and outputs a return temperature signal.

According to a further embodiment the said gain factor calculation module may be configured to calculate the gain factor on basis of an output signal of said regulator, and the feed temperature signal and further preferably, additionally on basis of the return temperature signal. This means the gain factor is calculated on basis of one or two temperature signals and preferably the output of the regulator. Thereby, in case of a mixing device it is an advantage of the invention that for calculation of this gain factor only one of the inlet temperatures of the mixing devices has to be detected. In case that the return temperature is considered this represents a temperature of one of the two inlet flow of the mixing device. The second temperature of the second inlet flow of the mixing device is not considered for calculation of the gain factor. In case of a heat exchanger there is an inlet flow which is regarded, namely a return flow on the secondary side of the heat exchanger being part of the load circuit. The temperature of the inlet flow on the primary side of the heat exchanger is not required for deriving the gain factor.

In the following the invention is described by way of examples with reference to the accompanying drawings. In these:

Fig. 1     shows a heat transfer system according to a first embodiment,

Fig.2     shows a heat transfer system according to a second embodiment,

Fig.3     shows a heat transfer system according to a third embodiment,

Fig.4     shows a heat transfer system according to fourth embodiment,

Fig. 5     shows a control structure according to a first embodiment, and

Fig. 6     shows a control structure according to a second embodiment.

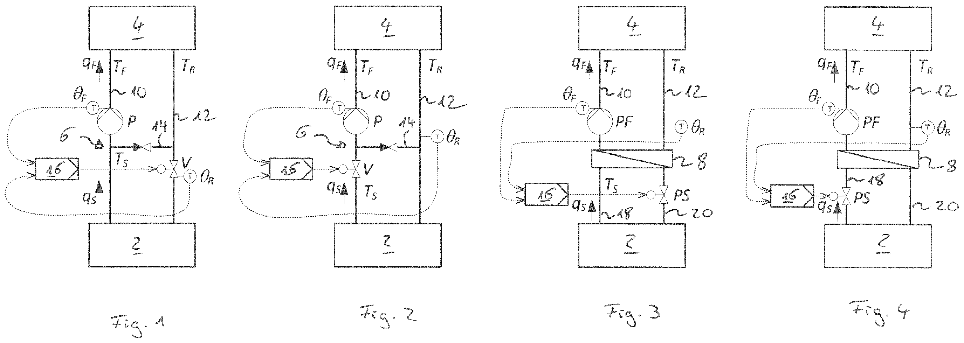

Figures 1 to 4 show four different examples of heat transfer systems and examples for heat transfer devices according to the invention or the be used with the method according to the invention.

The shown heat transfer systems comprise a source or supply circuit 2 and a load circuit 4 with a heat transfer device between. In the embodiments according to figures 1 and 2 the heat transfer device is a mixing device 6. In the embodiments according to figures 3 and 4 the heat transfer device is realized as a heat exchanger 8. In all four embodiments there is arranged a pump P, PF in the feed line 10 of the load circuit 4. The pump P,PF produces a feed flow $q_F$ in the feed line 10. In the embodiments according to figures 1 and 2 there is a return line 12 connecting the load circuit 4 and the supply circuit 2. The return line 12 is connected to the mixing device 6 or mixing point via a shunt 14. In the shunt 14 there is arranged a check valve preventing a flow from the mixing point towards the return line 12. For adjusting the mixing ratio between a supply flow qs from the supply circuit 2 and the flow from the return line 12 via shunt 14 there is arranged an actuator in form of a valve V. In the embodiment according to figure 1 the valve V is arranged downstream to the point or junction at which shunt 14 is connected with the return line 12. In the embodiment according to figure 2 the valve V is arranged in the supply line connecting the supply circuit 2 and the mixing device 6. This means in both embodiments the valve V is arranged in a single flow path, regulating the flow through one flow path only. The valve V is controlled by a control device 16 adjusting the opening degree of the valve V. The control device 16 is connected with two temperature sensors T detecting the feed temperature $T_F$ and the return temperature $T_R$ of the load circuit 4. For detecting a temperature value $\Theta_F$ representing the feed temperature $T_F$ there is arranged a temperature sensor T inside the pump P,PF. For detecting a temperature signal $\Theta_R$ representing the return temperature $T_R$ there is arranged a temperature sensor T in the return line 12 or in the first embodiment according to figure 2 is integrated into the valve V arranged in the return line 12.

In the two embodiments shown in figures 3 and 4 there is arranged a heat exchanger 8 between the supply circuit 2 and the load circuit 4 acting as a heat transfer device. Thus, there is a closed circuit for the load circuit 4 via the feed line 10 and the return line 12. Furthermore, there is a closed supply circuit via a supply line 18 and a source return line 20. The heat exchanger 8 allows a heat transfer between these two closed circuits. To regulate or adjust the amount of heat transferred via the heat exchanger 8 there is arranged a valve PS either in the supply line 18 or the source return line 20 of the primary side of the heat exchanger 8. This valve PS is controlled by the control device 16 using the same temperature sensors T as explained above. The temperature sensor T detecting the return temperature $T_R$ is arranged or attached to the return line 12. The supply flow qs may be provided by a not shown further pump in the supply circuit 2.

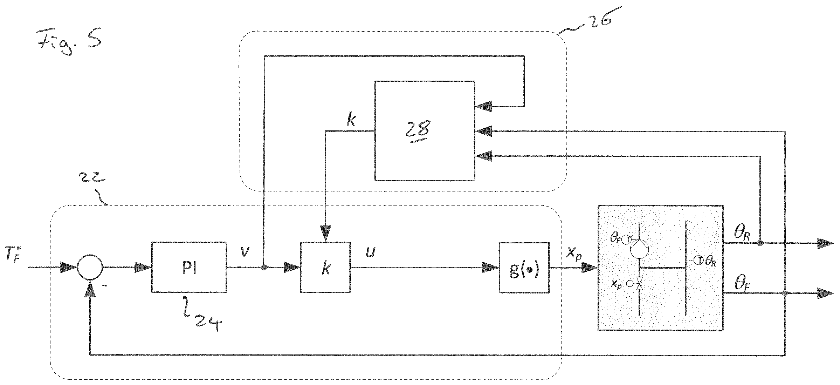

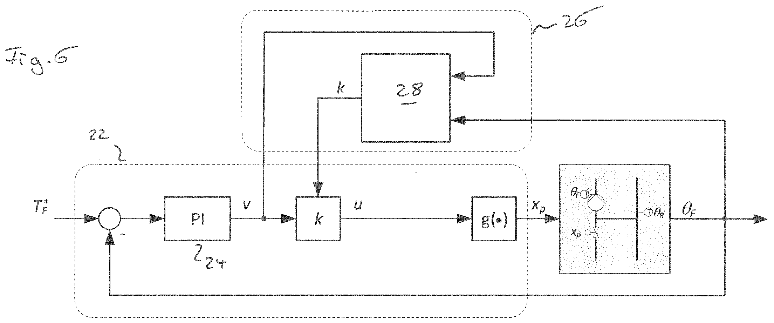

There is provided a closed loop temperature control for controlling the feed temperature $T_F$ as described in the following with reference to figures 5 and 6. The closed loop temperature control 22 controls the feed temperature $T_F$ to keep the feed temperature $T_F$ at or close to a set temperature $T^*_F$. For this there is provided a regulator 24, in this example a PI-regulator 24. The regulator 24 receives as an input signal a difference between the set temperature $T^*_F$ and a temperature value $\Theta_F$ detected by the temperature sensor T in the feed line 10. The temperature value $\Theta_F$ represents the current feed temperature $T_F$. The regulator 24 produces an output signal v to which a gain factor k is applied, for example by multiplication. The resulting output signal u is adjusted by a function $g(\cdot)$ representing the valve characteristic of the valve V, PS. The resulting control signal $X_p$ is applied to the valve V or PS to adjust the opening degree. The control signal $X_p$ thus represents the opening degree. In this example there is shown a hydraulic system representing the embodiment according to figure 2, however, the control can be applied to all embodiments shown in figures 1 to 4.

The gain adaption 26 is carried out by a gain factor calculation module 28 or observer 28, which together with the closed loop temperature control 22 is part of the control device 16. In the embodiment according to figure 2 a gain factor k is calculated or derived on basis of three signals, the output signal v of the regulator 24, a feed temperature signal $\Theta_F$ representing the current feed temperature $T_F$ and a return temperature signal $\Theta_R$ representing the current return temperature $T_R$ which is detected by the temperature sensor T in the return line 12. Differing from this embodiment according to the embodiment in figure 6 the gain factor calculation module 28 uses only two input signals for calculating or deriving the gain factor k, namely the output signal v of regulator 24 and the feed temperature signal $\Theta_F$. By adjusting the gain factor k and applying this gain factor k to the output signal v of the regulator 24 it is possible to continuously adjust the loop gain. This allows the use of a standard regulator 24, like a PI-regulator.

This control structure that can control the feed temperature $T_F$ of the mixing loop with the same dynamic response despite of the supply pressure $\Delta p$, the supply temperature Ts, return temperature $T_R$, and the forward flow $q_F$. The feed temperature is given by

$$T_F = (T_S - T_R)\frac{q_S}{q_F} + T_R \qquad (1)$$

Here qs is the supply flow. The supply flow qs is controlled by the opening $X_p$ of the valve V or PS. In the embodiment according to figure 2 the supply qs is directly controlled by the valve V. In the embodiment according to figure 1 the supply flow qs is controlled by the valve V adjusting the return flow towards the source. In the embodiments according to figures 3 and 4 the flow through the primary side of the heat exchanger 8 is controlled by the valve PS, either arranged on the entry or the outlet side of the heat exchanger 8. The supply flow qs is given by

$$q_S = k_{vs} f(x_p) \sqrt{\Delta p} \qquad (2)$$

Here $k_{vs}$ is the valve size, $f(x_p)$ is the valve characteristic, $X_p \in [0;1]$ is the opening of the valve, and $\Delta p$ is the not measured pressure over the valve. Equation (2) shows that the supply flow, and thereby from (1) the feed temperature, depends on the supply pressure $\Delta p$. Moreover, (1) also shows that the temperature difference $\Delta T = T_S - T_R$ and the feed flow $q_F$ affect the relation between the valve opening and the feed flow.

In the case considered here, the return temperature $T_R$ is assumed to be measured by a temperature sensor T with direct contact to the water, whereas the feed temperature $T_F$ is measured by an indirect measurement inside the pump P, PF. This means that there is considerable dynamic effect on the relation between the actual and the measured value of the feed temperature $T_F$.

The feed temperature $T_F$ in (1) is the actual temperature just after the mixing point 6, see Figure 1 or 2. However, as described above this is not the temperature that is measured. The dynamics of a temperature sensor T can typically be modelled by a first order system with a delay. On the top of the sensor delay, also a transport delay from the mixing point 6 to the sensor must be considered. Let $\Theta_F$ be the sensor value of the feed temperature, then combining (1) and (2) with the sensor dynamics leads to the following relation between the valve opening $X_p$ and the measured forward temperature $\Theta_F$

$$\tau \dot{\theta}_F(t) + \theta_F(t) = \Delta T \frac{k_{vs}\sqrt{\Delta p}}{q_F} f(x_p(t - h - h_F)) + T_R(t - h - h_F) \qquad (3)$$

Here, $\tau$ and $h$ is the time constant and delay of the sensor, respectively, and $\Delta T = T_S(t - h - h_F) - T_R(t - h - h_F)$ is the difference between the supply and return temperature. Moreover, there is also a forward flow dependent delay given by

$$h_F = \frac{G}{q_F} \qquad (4)$$

Here G is the delay constant that depends on the volume of the pipe between the mixing point 6 and the sensor position. The feed flow $q_F$ is in many applications constant leading to a constant delay $h_F$. Moreover, in this case the delay h may be h » $h_F$. The inverse of the valve characteristic is denoted by g(·) such that $f(g(u)) = u$. This may result in the example for a control structure shown in figure 5.

With this control structure the temperature $T_F$ is controlled by a standard PI controller well known to the staff typically handling mixing loops. Therefore, the staff can use standard procedures to adjust the response to application needs in the same way as they are used to.

The gain factor adaption 26 allows to continuously adjust the loop gain of the gain factor k. The loop gain is adjusted such that it is constantly equal to a predefined value, here denoted $\overline{K}$. With the adjustment imposed by the gain factor k the system dynamics becomes

$$\tau \dot{\theta}_F(t) + \theta_F(t) = \overline{K} v(t - h - h_F) + T_R(t - h - h_F) \qquad (5)$$

which can be used for the design of the PI controller controlling the feed temperature $T_F$. With this design the closed loop dynamics becomes independent of temperature, flow, and pressure values in the system.

In the control structure in Figure 5 this results in

$$\overline{K} = \Delta T \frac{k_{vs}\sqrt{\Delta p}}{q_F} k$$

This means that the gain factor k is continuously adjusted to match the changes in the term $\Delta T k_{vs} \sqrt{\Delta p} / q_F$ and thereby keeping the value $\overline{K}$.

In the embodiment according to figure 6 the return temperature $T_R$ is not regarded for calculating the gain factor k. In this case the gain factor k can be updated for example by using a batch estimation approach.

**Reference numerals**

| | |
|---|---|
| 2 | source or supply circuit |
| 4 | load circuit |
| 6 | mixing device |
| 8 | heat exchanger |
| 10 | feed line |
| 12 | return line |
| 14 | shunt |
| 16 | control device |
| 18 | supply line |
| 20 | source return line |
| 22 | closed loop temperature control |
| 24 | regulator |
| 26 | gain adaption |
| 28 | gain factor calculation module |
| P, PF | pump |
| V, PS | valve |
| v | output signal of regulator 24 |
| k | gain factor |
| u | output signal |
| $X_p$ | control signal, valve opening |
| T | temperature |
| $\Theta$ | temperature value |
| qs | supply flow |
| $q_F$ | feed flow |

**Claims**

1. Method for adjusting a desired feed temperature ($T_F$) in a heat transfer system by controlling a heat transfer device (6,8) in the heat transfer system, the heat transfer device (6,8) comprising an actuator (V; PS) arranged in a single flow path of the heat transfer system and being configured for regulating an amount of heat transfer by adjusting the fluid flow in said single flow path, wherein a closed loop temperature control (22) is carried out to set a control signal ($x_r$) controlling the actuator(V; PS)
   **characterized in that**
   in the closed loop temperature control (22) a gain factor (k) is applied to an output signal (v) of a regulator (24), the gain factor(k) being calculated at least on basis of a feed temperature signal ($\Theta_F$) representing the feed temperature ($T_F$)detected in the heat transfer system downstream the heat transfer device (6,8).

2. Method according to claim 1, **characterized in that** the heat transfer device is a mixing device (6) or a heat exchanger (8).

3. Method according to claim 1 or 2, **characterized in that** the gain factor (k) is calculated additionally on basis of an output (v) of said regulator (24).

4. Method according to one of the claims 1 to 3, **characterized in that** the gain factor (k) is calculated on basis of two temperature signals ($\Theta_F$, ($\Theta_R$), which two temperature signals represent the feed temperature ($T_F$) and the temperature ($T_R$) in one inlet flow temperature ($T_F$) of the heat transfer device, and preferably represent the feed and a return temperature ($T_R$) detected in the heat transfer system.

5. Method according to one of the preceding claims, **characterized in that** said gain factor (k) is calculated on basis of three signals which are the output signal (v) of said regulator (24), a first temperature signal ($\Theta_F$) representing the feed temperature ($T_F$) and a second temperature signal ($\Theta_R$) representing the return temperature (TR).

6. Method according to one of the preceding claims, **characterized in that** the gain factor (k) is calculated such that the loop gain (k) of the closed loop control (22) is kept constant, preferably constantly equal to a predefined value.

7. Method according to one of the preceding claims, **characterized in that** closed loop temperature control (22) uses a temperature signal ($\Theta_F$) representing the feed temperature ($T_F$) as feedback.

8. Method according to one of the preceding claims, **characterized in that** said regulator (24) is a standard regulator, preferably a PI-regulator or PID-regulator.

9. Method according to one of the preceding claims, **characterized in that** the output (v) of the regulator (24) is multiplied with the gain factor (k).

10. Method according to one of the preceding claims, **characterized in that** the control signal ($x_P$)is adjusted by a function (g) representing the characteristic of said actuator (V; PS), preferably after applying the gain factor (k).

11. Method according to one of the preceding claims, **characterized in that** said actuator is a pump or two-way valve (V; PS), preferably arranged in a feed line upwards a mixing point (6), in a shunt (14) connecting a return line (12) and the feed line (10), in the return line (12) downstream a junction of the shunt (14) or in a supply or return on the primary side of a heat exchanger (8).

12. Heat transfer system, having a supply circuit (2) and at least one load circuit (4), the heat transfer system (6, 8) comprising at least one actuator (V; PS) being arranged in a single flow path and configured to regulate a flow of a heat transfer medium and a control device (16) controlling said at least one actuator (V; PS), wherein the control device (16) comprises a regulator (24) configured to carry out a closed loop temperature control **characterized in that**

the control device (16) comprises a gain factor calculation module (28) being configured to calculate a gain factor (k) on basis of at least one feed temperature signal ($\Theta_F$) representing the feed temperature ($T_F$)of the load circuit (4), and
the control device (16) is configured to apply said gain factor (k) to an output signal (v) of the regulator (24).

13. Heat transfer system according to claim 12, **characterized by** a mixing device (6) or heat exchanger (8).

14. Heat transfer system according to claim 12 or 13, **characterized in that** the at least one actuator is a pump or two-way valve (V; PS).

15. Heat transfer system according to one of the claims 12 to 14, **characterized by** a feed temperature sensor (T) arranged to detect a feed temperature ($T_F$) of the at least one load circuit (4), which feed temperature sensor (T) is connected to the control device (16) and outputs a feed temperature ($\Theta_F$) signal, wherein the regulator (24) preferably is configured to receive the feed temperature signal ($\Theta_F$) as a feedback signal.

16. Heat transfer system according to one of the claims 12 to 15, **characterized by** a return temperature sensor (T) arranged to detect a return temperature ($T_R$) of said at least one load circuit (4), which return temperature sensor is connected to the control device (16) and outputs a return temperature signal ($\Theta_R$).

17. Heat transfer system according to one of the claims 12 to 16, **characterized in that** said gain factor (k) calculation module (28) is configured to calculate the gain factor (k) on basis of an output signal (v) of said regulator (24) and the feed temperature signal ($\Theta_F$) and preferably additionally the return temperature signal ($\Theta_R$).

**Fig. 1**

4

$q_F$  $T_F$  $T_R$

$\theta_F$  (T)  ~10

$P$  6  14  ~12

16  $T_S$  V  $\theta_R$ (T)

$q_S$

2

Fig. 1

**Fig. 2**

4

$q_F$  $T_F$  $T_R$

$\theta_F$  (T)  ~10  ~12

$P$  6  14  $\theta_R$ (T)

16  V

$q_S$  $T_S$

2

Fig. 2

**Fig. 3**

4

$q_F$  $T_F$  $T_R$

$\theta_F$  (T)  ~10  ~12

$PF$  (T) $\theta_R$

~8

16  $T_S$  PS

$q_S$  ~18  ~20

2

Fig. 3

**Fig. 4**

4

$q_F$  $T_F$  $T_R$

$\theta_F$  (T)  ~10  ~12

$PF$  (T) $\theta_R$

~8

16  ~18

$q_S$  PS  ~20

2

Fig. 4

EP 4 194 762 A1

Fig. 5

Fig. 6

$T_F^*$

PI ~24

22 ~

26

28

k

$K$

u

v

$g(\cdot)$

$x_p$

$\theta_R$

$\theta_F$

$x_p$

$\theta_F$

Europäisches
Patentamt

European
Patent Office

Office européen
des brevets

# EUROPEAN SEARCH REPORT

Application Number

**EP 21 21 4168**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/136377 A1 (KALLESØE CARSTEN SKOVMOSE [DK] ET AL) 21 May 2015 (2015-05-21) * figures 1a, 1b, 8 * | 1-17 | INV. F24D19/10 G05D23/13 G05D23/19 |
| A | US 5 032 992 A (BERGMANN KONRAD [DE]) 16 July 1991 (1991-07-16) * the whole document * | 1-17 | |

| TECHNICAL FIELDS SEARCHED (IPC) |
|---|
| F24H F24D G05D |

The present search report has been drawn up for all claims

| Place of search | Date of completion of the search | Examiner |
|---|---|---|
| Munich | 3 May 2022 | Schwarzenberger, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................

& : member of the same patent family, corresponding document

EPO FORM 1503 03.82 (P04C01)

**EP 4 194 762 A1**

## ANNEX TO THE EUROPEAN SEARCH REPORT
## ON EUROPEAN PATENT APPLICATION NO.

EP 21 21 4168

This annex lists the patent family members relating to the patent documents cited in the above-mentioned European search report.
The members are as contained in the European Patent Office EDP file on
The European Patent Office is in no way liable for these particulars which are merely given for the purpose of information.

03-05-2022

| Patent document cited in search report | | Publication date | Patent family member(s) | | Publication date |
|---|---|---|---|---|---|
| US 2015136377 | A1 | 21-05-2015 | CN | 104654448 A | 27-05-2015 |
| | | | DK | 2874039 T3 | 17-07-2017 |
| | | | EP | 2874039 A1 | 20-05-2015 |
| | | | RU | 2014146052 A | 10-06-2016 |
| | | | US | 2015136377 A1 | 21-05-2015 |
| US 5032992 | A | 16-07-1991 | AT | 100222 T | 15-01-1994 |
| | | | BR | 8703829 A | 29-03-1988 |
| | | | CA | 1311231 C | 08-12-1992 |
| | | | DE | 3624799 A1 | 28-01-1988 |
| | | | DK | 558386 A | 24-01-1988 |
| | | | EP | 0253921 A2 | 27-01-1988 |
| | | | ES | 2048726 T3 | 01-04-1994 |
| | | | JP | S6344213 A | 25-02-1988 |
| | | | MX | 173128 B | 02-02-1994 |
| | | | PT | 83755 A | 17-06-1987 |
| | | | US | 5032992 A | 16-07-1991 |

EPO FORM P0459

For more details about this annex : see Official Journal of the European Patent Office, No. 12/82